# EUROPEAN PATENT APPLICATION

(11) **EP 4 717 929 A1**
(43) Date of publication of application: **01.04.2026**
(21) Application number: 24202797.7
(22) Date of filing: 26.09.2024
(51) Int. Cl.: F15B 11/16, B66F 9/22, F15B 20/00, F15B 21/08

(54) **APPARATUS AND METHOD FOR CONTROLLING OPENING DEGREES OF VALVES REGULATING FLOW OF HYDRAULIC FLUID IN A HYDRAULIC SYSTEM OF A LIFTING EQUIPMENT, LIFTING EQUIPMENT AND VEHICLE**

(71) Applicant: Palfinger AG, 5101 Bergheim bei Salzburg (AT)
(72) Inventor: KALTENBRUNNER, Daniel, 5203 Köstendorf-Salzburg (AT); BESSING, Fabian, 5203 Köstendorf-Salzburg (AT)
(74) Representative: 2SPL Patentanwälte PartG mbB

(57) **Abstract**

Provided is an apparatus for controlling opening degrees of valves regulating flow of hydraulic fluid in a hydraulic system of a lifting equipment to provide hydraulically driven functions of the lifting equipment. The apparatus includes processing circuitry configured to receive first input data indicating a user input. The user input indicates a target movement to be performed by the lifting equipment. The processing circuitry is configured to determine, based on the first input data, a target flow rate of the hydraulic fluid to be provided by a displacement pump of the hydraulic system for performing the target movement. The displacement pump is driven by a rotary drive. Further, the processing circuitry is configured to receive second input data indicating a status of the rotary drive or a drive system driving the rotary drive and to dynamically determine, based on the second input data, a maximum flow rate of the hydraulic fluid providable by the displacement pump. If the maximum flow rate providable is lower than the target flow rate, the processing circuitry is configured to control the valves to reduce their opening degrees according to a predefined logic to reduce a torque or power to be delivered by the rotary drive for driving the displacement pump by reducing the flow rate of the hydraulic fluid in the hydraulic system.

## Description

### Field

The present disclosure relates to regulating flow of hydraulic fluid in a hydraulic system of a lifting equipment. Examples of the present disclosure relate to an apparatus and a method for controlling opening degrees of valves regulating flow of hydraulic fluid in a hydraulic system of a lifting equipment, a lifting equipment comprising the apparatus and a vehicle having mounted thereon or being the lifting equipment.

### Background

Cranes, in particular loader cranes play a pivotal role in various industries, providing efficient lifting and handling capabilities. Various functions of a crane such as lifting, lowering, extending, retracting, rotating, and stabilizing use hydraulic power provided by a displacement pump of the crane. The displacement pump pumps hydraulic oil to provide the required hydraulic power. The displacement pumps are driven by drive units such as Power Take-Offs (PTOs), electric Power Take-Offs (ePTOs) or electrohydraulic power units.

Conventionally, drive units driving displacement pumps cannot reduce power or torque dynamically according to the system needs. With conventional fixed power or torque limits one or more crane movements or the whole drive system could stop working when multiple hydraulic functions are operated simultaneously. To avoid stopping of crane movements or the whole drive system, various approaches are used in the market. For example, an oversized system which can deliver the needed hydraulic power in every condition may be used. However, an oversized system is big, heavy and costly. Alternatively, a hydraulic power controller which limits the system in terms of performance may be used. This will, however, limit the performance and one or more crane movements could stop working when multiple hydraulic functions are operated simultaneously. Further alternatively, a hydraulic valve may be used to limit the flow of the pump. This reduces the swivel angle of the displacement pump, thereby also reducing the required power and the necessary torque on the pump shaft. As another alternative, an electric load sensing pump may be used. However, the electric load sensing pump requires additional sensors and actuators.

The same problems arise with other types of lifting equipment equipped with a hydraulic system, such as forklifts or lifting platforms.

Hence, there may be a demand for improved control of the hydraulic system of lifting equipment.

### Summary

This demand is met by an apparatus and a method for controlling opening degrees of valves regulating flow of hydraulic fluid in a hydraulic system of a lifting equipment, a lifting equipment, a vehicle, a non-transitory machine-readable medium and a program in accordance with the independent claims. Advantageous embodiments are defined by the dependent claims.

According to a first aspect, the present disclosure provides an apparatus for controlling opening degrees of valves regulating flow of hydraulic fluid in a hydraulic system of a lifting equipment to provide hydraulically driven functions of the lifting equipment. The apparatus comprises processing circuitry configured to receive first input data indicating a user input. The user input indicates a target movement to be performed by the lifting equipment. The processing circuitry is configured to determine, based on the first input data, a target flow rate of the hydraulic fluid to be provided by a displacement pump of the hydraulic system for performing the target movement. The displacement pump is driven by a rotary drive. Further, the processing circuitry is configured to receive second input data indicating a status of the rotary drive or a drive system driving the rotary drive and to dynamically determine, based on the second input data, a maximum flow rate of the hydraulic fluid providable by the displacement pump. If the maximum flow rate providable is lower than the target flow rate, the processing circuitry is configured to control the valves to reduce their opening degrees according to a predefined logic to reduce a torque or power to be delivered by the rotary drive for driving the displacement pump by reducing the flow rate of the hydraulic fluid in the hydraulic system.

According to a second aspect, the present disclosure provides a lifting equipment comprising a hydraulic system. The hydraulic system comprises a displacement pump configured to be driven by a rotary drive for generating a flow of hydraulic fluid in the hydraulic system. Furthermore, the hydraulic system comprises valves configured to regulate the flow of the hydraulic fluid in the hydraulic system to provide hydraulically driven functions of the lifting equipment. The lifting equipment further comprises the apparatus according to the first aspect for controlling the opening degrees of the valves.

According to a third aspect, the present disclosure provides a vehicle having mounted thereon or being the lifting equipment according to the second aspect.

According to a fourth aspect, the present disclosure provides a method for controlling opening degrees of valves regulating flow of hydraulic fluid in a hydraulic system of a lifting equipment to provide hydraulically driven functions of the lifting equipment. The method comprises receiving first input data indicating a user input. The user input indicates a target movement to be performed by the lifting equipment. The method comprises determining, based on the first input data, a target flow rate of the hydraulic fluid to be provided by a displacement pump of the hydraulic system. The displacement pump is driven by a rotary drive. In addition, the method comprises receiving second input data indicating a status of the rotary drive or a drive system driving the rotary drive and dynamically determining, based on the second input data, a maximum flow rate of the hydraulic fluid providable by the displacement pump. If the maximum flow rate providable is lower than the target flow rate, the method comprises controlling the valves to reduce their opening degrees according to a predefined logic to reduce a torque or power to be delivered by the rotary drive for driving the displacement pump by reducing the flow rate of the hydraulic fluid in the hydraulic system.

According to a fifth aspect, the present disclosure provides a non-transitory machine-readable medium having stored thereon a program having a program code for performing the method according to the fourth aspect, when the program is executed on a processor or a programmable hardware.

According to a sixth aspect, the present disclosure provides a program having a program code for performing the method according to the fourth aspect, when the program is executed on a processor or a programmable hardware.

By reducing the flow rate of the hydraulic fluid in the hydraulic system when the rotary drive driving the displacement pump cannot meet the target flow rate, overload of the rotary drive is prevented. This protects the rotary drive and the hydraulic system from damage and extends its lifespan. Furthermore, reducing the flow rate of the hydraulic fluid in the hydraulic system allows to avoid stopping of the hydraulically driven functions entirely. This ensures that the lifting equipment operates smoothly even when under high demand, avoiding abrupt stops that could disrupt operations. The predefined logic allows for different prioritization strategies, which may, e.g., be tailored to specific operational needs. By dynamically adjusting the flow rate based on real-time conditions, oversized hydraulic systems may be avoided, leading to better energy efficiency and reduced energy emissions. In other words, the sustainability of the lifting equipment may be improved. The integration of user inputs and rotary drive status allows for precise control of the lifting equipment, improving operational accuracy and safety.

### Brief description of the Figures

Some examples of apparatuses and/or methods will be described in the following by way of example only, and with reference to the accompanying figures, in which
Fig. 1 schematically illustrates an example of a lifting equipment comprising a hydraulic system and an apparatus for controlling opening degrees of valves regulating flow of hydraulic fluid in the hydraulic system;
Fig. 2 schematically illustrates an example of a crane;
Fig. 3 illustrates an example of a vehicle; and
Fig. 4 illustrates a flowchart of an example of a method for controlling opening degrees of valves regulating flow of hydraulic fluid in a hydraulic system of a lifting equipment.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

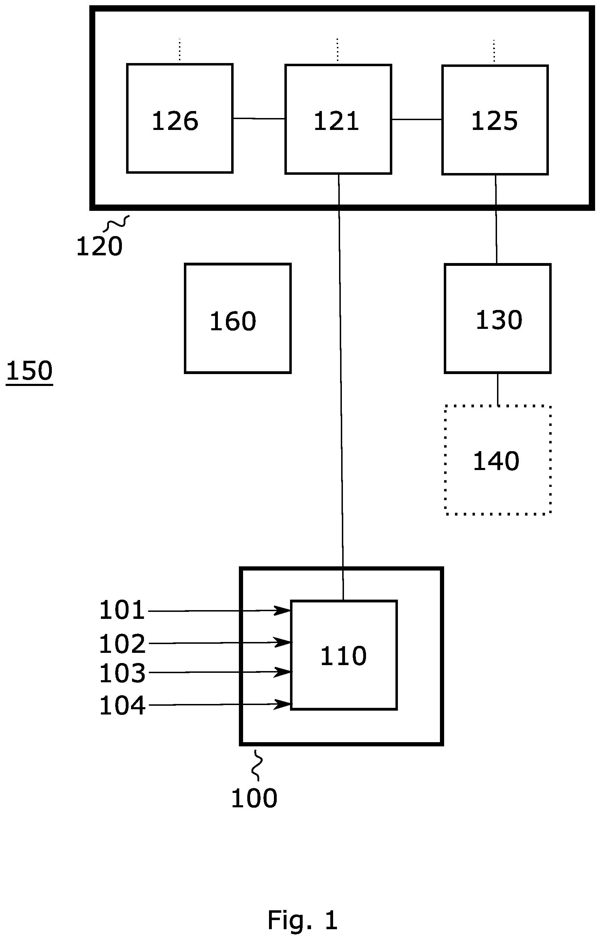

**Fig. 1** schematically illustrates a lifting equipment 150. The lifting equipment 150 is any machinery (device) for lifting loads (e.g., goods and/or people) using hydraulic power. For example, the lifting equipment may be a crane such as a knuckle boom or loader crane for loading and unloading goods (loads). Alternatively, the lifting equipment may, e.g., be the crane section of a mobile crane (with a vehicle being a mobile platform having mounted thereon the crane section) or the entire mobile crane. In some examples, the lifting equipment may be a stationary crane. In other examples, the lifting equipment may, e.g., be a forklift comprising a pronged device in the front, called forks, which can be inserted under loads to lift and carry them. In still other examples, the lifting equipment may, e.g., be a lifting platform (elevating platform of lift table) comprising a platform supported by a mechanical structure in a liftable manner to a base of the lifting platform.

The lifting equipment comprises a hydraulic system (hydraulic circuit) 120 to provide hydraulically driven functions of the lifting equipment 150. The hydraulically driven functions of the lifting equipment 150 are mechanical movements, operational tasks and actions that are performable (performed) or providable (provided) by the lifting equipment 150 using hydraulic power provided or generated by the hydraulic system 120. In other words, the hydraulically driven functions of the lifting equipment 150 are functions of the lifting equipment 150 that are driven (e.g. powered and controlled) by hydraulic power provided by the hydraulic system 120. The hydraulically driven functions of the lifting equipment 150 may, e.g., be lifting (e.g., of a load or a tool/equipment attached to the lifting equipment 150), lowering (e.g., of a load or a tool/equipment attached to the lifting equipment 150), extending (e.g., lengthening of an extendable lifting device such as an extendable crane arm), retracting (e.g., shortening of an extendable lifting device such as an extendable crane arm), tilting (e.g., adjusting an angle of a load and/or an a lifting device such as crane arm), rotating (e.g., a lifting device such as crane arm around a rotating axis of the lifting equipment 150) and stabilizing (e.g., balancing the lifting equipment 150 during operation using outriggers).

The hydraulic system 120 comprises a displacement pump 125 and one or more hydraulic actuators 126 (which may be understood as consumers). The one or more hydraulic actuators 126 are hydraulically coupled to the displacement pump 125. The displacement pump 125 may be a fixed displacement pump or a variable displacement pump. The one or more hydraulic actuators 126 are mechanical devices configured to convert hydraulic power into mechanical force or motion for controlled force or movement to specific (predefined) parts of the lifting equipment 150 to provide (enable) the hydraulically driven functions of the lifting equipment 150. The motion (force) may be linear or rotary motion (force). For example, the one or more hydraulic actuators 126 may comprise one or more linear actuators such as one or more hydraulic cylinders. Alternatively, the one or more hydraulic actuators 126 may comprise one or more rotary actuators such as one or more slewing drives, one or more hydraulic motors or one or more hydraulic vane actuators.

A rotary drive (rotary actuator, rotary motion drive) 130 is driving the displacement pump 125. The rotary drive 130 is configured to produce (provide) controlled rotational movement. As schematically indicated in Fig. 1, the displacement pump 125 of the lifting equipment 150 is driven by the rotary drive 130 to provide the hydraulic power. For example, the hydraulic power may be provided by means of a flow of hydraulic fluid caused (generated) by the displacement pump 125 when driven by the rotary drive 130. In general, any type of hydraulic fluid suitable for transmitting power efficiently may be used. For example, the hydraulic fluid may be a mineral oil-based hydraulic fluid or a synthetic hydraulic fluid. The hydraulic power provided by the displacement pump 125 is used by the one or more hydraulic actuators 126 for providing the hydraulically driven functions of the lifting equipment 150.

The hydraulic system 120 comprises valves 121 hydraulically coupled between the displacement pump 125 and the one or more hydraulic actuators 126 to regulate the flow of the hydraulic fluid in the hydraulic system 120 for providing the hydraulically driven functions of the lifting equipment 150.

For reasons of simplicity, various elements of the lifting equipment 150 such as its equipment base (e.g., the crane base of a crane or the base of a lifting platform), lifting devices (e.g., a boom or crane arm of a crane, the forks of a forklift, the platform of a lifting platform), outriggers (e.g., crane legs) or reservoir(s) for the hydraulic fluid are not illustrated in Fig. 1.

The rotary drive 130 may be part of the lifting equipment 150. In other examples, the rotary drive 130 may be external to the lifting equipment 150 (e.g., external to a crane such as a loader crane). In other words, the rotary drive 130 is not part of the lifting equipment 150 in some examples. The rotary drive 130 may be any device or system capable of converting energy into mechanical rotation (rotational movement) in a controlled manner. For example, the rotary drive 130 may be an electric rotary drive comprising one or more electric motors for generating the rotational movement. According to examples of the present disclosure, the rotary drive 130 may be an electric rotary drive on a vehicle having mounted thereon (holding, carrying) the lifting equipment 150 or being the lifting equipment 150. Electric rotary drives are also denoted as ePTOs. In alternative examples, the rotary drive 130 may be a PTO driven by a drive system 140 (e.g., a combustion engine and optionally a gearbox). According to examples of the present disclosure, the rotary drive 130 may be a PTO of a vehicle having mounted thereon or being the lifting equipment 150. The vehicle may be a land vehicle (e.g., wheeled, tracked or railed) or a watercraft (e.g., a ship, a boat or a barge). For example, the lifting equipment 150 may be mounted to a vehicle such as a truck. For example, the lifting equipment 150 may be a crane (e.g., a knuckle boom or loader crane) mounted to a vehicle such as a truck for loading and unloading goods onto and from the vehicle. The rotary drive 130, in particular when implemented as electric rotary drive, may be detachably attached to the vehicle. In other examples, the rotary drive 130 may be fixedly attached to the vehicle. In still other examples, the rotary drive 130 may be external to the vehicle, i.e., not be part of the vehicle. For example, the rotary drive 130 may be part of an external aggregate or power unit to which the vehicle or the lifting equipment 150 (e.g., a stationary crane) is mechanically coupleable. Accordingly, the vehicle or the lifting equipment 150 may be configured to mechanically couple the displacement pump 125 to the external rotary drive. For reasons of clarity, the vehicle is not shown in Fig. 1.

The hydraulically driven functions of the lifting equipment 150 may be controlled by equipment control circuitry (equipment controller) 160 for controlling operation of the lifting equipment 150. The equipment control circuitry 160 may, e.g., be coupled to the displacement pump 125, the valves 121 and optionally further elements of the lifting equipment 150 and control their operation. The equipment control circuitry 160 may be configured to control the operation of the lifting equipment 150 based on one or more user inputs. In case the lifting equipment 150 is a crane, the equipment control circuitry 160 may be crane control circuitry (a crane controller) for controlling operation of the crane.

The lifting equipment 150 further comprises an apparatus 100 for controlling opening degrees of the valves 121. The opening degrees of the valves 121 are the extent to which the valves 121 in the hydraulic system 120 are opened to regulate the flow of the hydraulic fluid in the hydraulic system 120. The degree of opening determines how much hydraulic fluid can pass through the valve, thus controlling the flow rate, pressure, and ultimately the performance of the hydraulically driven functions of the lifting equipment 150. For example, the opening degrees may indicate or represent the position or angle of the respective valve's movable element (such as a spool or a poppet) relative to its fully closed or fully open position. This degree of opening directly influences the amount of hydraulic fluid that can flow through the valve. The opening degrees of the valves 121 may also be denoted as "valve deflections".

The apparatus 100 may be part of the lifting equipment 150 (e.g., be part of a crane). According to examples, the equipment control circuitry 160 for controlling operation of the lifting equipment 150 may comprise the apparatus 100. In other examples, the apparatus 100 and the equipment control circuitry 160 may be separate elements of the lifting equipment 150. In alternative examples, the apparatus 100 may be external to the lifting equipment 150, i.e., not be part of the lifting equipment 150. For example, a computing cloud communicatively coupled to the lifting equipment 150 (e.g., via a wireless connection) may comprise or be the apparatus 100. In still other examples, the vehicle having mounted thereon the lifting equipment 150 may comprise the apparatus 100.

The apparatus 100 comprises processing circuitry 110. For example, the processing circuitry 110 may be a single dedicated processor, a single shared processor, or a plurality of individual processors, some of which or all of which may be shared, a digital signal processor (DSP) hardware, an application specific integrated circuit (ASIC), a system-on-a-chip (SOC), a neuromorphic processor or a field programmable gate array (FPGA). The processing circuitry 110 may optionally be coupled to, e.g., memory such as read only memory (ROM) for storing software, random access memory (RAM) and/or non-volatile memory. For example, the apparatus 100 may comprise memory configured to store instructions, which when executed by the processing circuitry 110, cause the processing circuitry 110 to perform the steps and methods described herein.

The processing circuitry 110 is configured to receive first input data 101. The first input data 101 indicate (are encoded with information about) a user input. The user input indicates (represents) a target movement to be performed by the lifting equipment 150. The target movement denotes a desired, demanded or intended movement the lifting equipment 150 should perform. In other words, the target movement refers to a specific action or maneuver that the lifting equipment 150 (e.g., a crane) is intended to perform based on the user's input. The target movement is determined by the user's input and involves one or more of the hydraulically driven functions of the lifting equipment 150. The target movement may indicate actions like lifting, lowering, extending, retracting, rotating, or tilting, depending on the equipment's capabilities and the user's requirements. For example, the first input data 101 may be received from a remote control (not illustrated in Fig. 1). The remote control is a device for an operator (user) of the lifting equipment 150 for controlling the lifting equipment 150 from a distance. However, the present disclosure is not limited thereto. In other examples, the first input data 101 may be received from another entity such as an element or circuitry of the lifting equipment 150 (e.g., a Human-Machine Interface, HMI, of the lifting equipment 150), a mobile device (e.g., a mobile phone, a laptop-computer or a tablet-computer) of the operator of the lifting equipment 150 or a remote server.

Additionally, the processing circuitry 110 is configured to determine, based on the first input data 101, a target flow rate of the hydraulic fluid to be provided by the displacement pump 125 of the hydraulic system 120 for performing the target movement. The target flow rate denotes the desired, needed or intended flow rate at which the hydraulic fluid should flow through the hydraulic system 120 to achieve the specified target movement. In other words, the target flow rate is determined to ensure that the hydraulic system 120 provides the appropriate force and speed (i.e., hydraulic power) to carry out the target movement effectively. The hydraulic fluid is to be supplied (pumped) at the target flow rate by the displacement pump 125. For example, the target flow rate may indicate how much volume (e.g., how many liters) of hydraulic fluid the displacement pump 125 should deliver per unit of time (e.g., per second or per minute).

The user input may, e.g., be a measured position of at least one control lever of the remote control or the lifting equipment as an indication (indicator) for the target movement. The at least one control lever is for controlling operation of an element of the lifting equipment 150 that is driven by the hydraulic system 120, i.e., for movement of the lifting equipment 150. The position of the control lever(s) serves as a proxy or indicator for the target movement. Accordingly, the processing circuitry 110 may be configured to determine the target flow rate based on the measured position of the at least one control lever. In other examples, the first input data 101 may indicate a measured actuation (e.g., a pressing) of a button of the remote control or the lifting equipment. For example, a predefined movement may be assigned to the button (e.g., automated folding or unfolding of a crane arm in case the lifting equipment is a crane) such that pressing the button indicates the target movement to be performed by the lifting equipment.

The processing circuitry 110 may be configured to determine the target flow rate of the hydraulic fluid using a predefined computational model. The computational model is a mathematical representation (e.g., a set of mathematical equations) for determining the target flow rate of the hydraulic fluid taking into account the first input data 101 and optionally further inputs. The computational model may use various signal and/or data processing operations such as signal/data addition, subtraction, multiplication, division, integration, derivation, filtering (e.g., discrete, continuous or both), delaying, etc. to determine the target flow rate of the hydraulic fluid based on the various inputs to the processing circuitry 110.

The processing circuitry 110 is configured to further receive second input data 102. The second input data 102 indicate a status of the rotary drive 130 or the drive system 140 driving the rotary drive 130. The status of the rotary drive 130 or the drive system 140 driving the rotary drive 130 refers to the operational condition, i.e., the current state or operational parameters of the rotary drive 130 or the drive system 140. For example, the status of the rotary drive 130 may be one or more of a current (present) rotational speed of the rotary drive 130, a current (present) load or utilization of the rotary drive 130 (e.g., a current torque or power utilization of the rotary drive 130). Similarly, the status of the drive system 140 driving the rotary drive 130 may be one or more of a current (present) rotational speed of the drive system 140, a current (present) load or utilization of the drive system 140 (e.g., a current torque or power utilization of the drive system 140). The state of the rotary drive 130 or the drive system 140 driving the rotary drive 130 may be indicated by various parameters. In the following some exemplary parameters are listed. However, it is to be noted that the present disclosure is not limited thereto. The second input data 102 may indicate the status of the rotary drive 130 or the drive system 140 driving the rotary drive 130 using less, more or different parameters than those specified in the following.

For example, the second input data 102 may indicate a deviation or difference of an actual rotational speed of the rotary drive 130 or the drive system 140 from/to a target rotational speed for the rotary drive 130 or the drive system 140 as the status of the rotary drive 130 or the drive system 140. If the target rotational speed cannot be achieved or maintained by the rotary drive 130 or the drive system 140, it may be assumed that the utilization of the rotary drive 130 or the drive system 140 (e.g., an electric motor or a combustion engine) is 100 %.

Alternatively, the second input data 102 may be data of a CAN (Controller Area Network) bus of a vehicle having mounted thereon or being the lifting equipment 150 and indicating the torque utilization of the rotary drive 130 or the drive system 140. For example, if the CAN bus is according to the SAE J1939 standard, the second input data 102 may indicate the "Actual Engine - Percent Torque" parameter to indicate the torque utilization of the rotary drive 130 or the drive system 140 (assuming that the rotary drive 130 or the drive system 140 is part of the vehicle or at least controlled by the vehicle). Also other standards such as the CANopen standard provide parameters to indicate the torque utilization of the rotary drive 130 or the drive system 140 and may be used for the second input data 102.

Further alternatively, the second input data 102 may indicate a measured motor current of a motor of the rotary drive 130 or the drive system 140 or a torque estimate of an inverter of the rotary drive 130 or the drive system 140 as the status of the rotary drive 130 or the drive system 140. These parameters may be read from various signal paths of the rotary drive 130, the drive system 140, the lifting equipment 150 or a vehicle having mounted thereon or being the lifting equipment 150 (e.g., an analog signal path, a digital signal path or a CAN bus).

Furthermore, the second input data 102 may indicate a measured pressure of/at the displacement pump 125. The pump of/at the displacement pump 125 allows to calculate the torque applied to the displacement pump 125 by the rotary drive 130. For example, if the displacement pump 125 is a fixed displacement pump, the torque applied to the displacement pump 125 by the rotary drive 130 may be calculated via the displacement and the efficiency of the displacement pump 125. If the displacement pump 125 is a variable displacement pump, the torque applied to the displacement pump 125 by the rotary drive 130 may be calculated via the swivel angle, the maximum displacement and the efficiency of the displacement pump 125.

In further alternatives, the second input data 102 may indicate a measured torque at the displacement pump 125, the rotary drive 130 or the drive system 140. For example, the torque may be measured using a torque sensor such as a magnetostrictive torque sensor. The measured torque may be compared to a maximum providable torque of the rotary drive 130 or the drive system 140 to determine the utilization of the rotary drive 130 or the drive system 140.

In some example, the second input data 102 may indicate one or more of a utilization, a current and a voltage of a battery supplying the rotary drive 130 with electrical energy as the status of the rotary drive 130 (assuming that the rotary drive 130 is an electric rotary drive such as an ePTO).

The processing circuitry 110 may, e.g., be configured to directly receive the second input data 102 from the rotary drive 130, the drive system 140, control circuitry thereof or a vehicle having mounted thereon or being the lifting equipment 150. In some examples, the processing circuitry 110 may be configured to receive the second input data 102 from an intermediate element such as the equipment control circuitry 160 or a buffer memory of the lifting equipment 150.

In addition, the processing circuitry 110 is configured to dynamically determine, based on the second input data 102, a maximum flow rate of the hydraulic fluid providable by the displacement pump 125. The maximum flow rate of the hydraulic fluid providable by the displacement pump 125 refers to the highest rate at which the displacement pump 125 can supply hydraulic fluid to the hydraulic system 120 under the current operating conditions specified by the status of the rotary drive 130 or the drive system 140 driving the rotary drive 130. In other words, the maximum flow rate is the upper limit of hydraulic fluid flow that the displacement pump 125 can deliver at any given moment. It represents the highest volume of hydraulic fluid that the displacement pump 125 can push through the hydraulic system per unit of time (e.g., liters per minute) without exceeding the capabilities of the rotary drive 130 or the drive system 140 driving the rotary drive 130 (and also the capabilities of the displacement pump 125). The maximum flow rate of the hydraulic fluid providable by the displacement pump 125 is determined dynamically making it a variable limit that represents the highest rate at which the displacement pump 125 can deliver hydraulic fluid. In other words, processing circuitry 110 determines the maximum flow rate of the hydraulic fluid providable by the displacement pump 125 continuously and automatically. The calculation of the maximum flow rate of the hydraulic fluid providable by the displacement pump 125 is not static or fixed, it changes dynamically in response to fluctuations in the status of the rotary drive 130 or the drive system 140 as indicated by the second input data 102.

The processing circuitry 110 may, e.g., be configured to determine the maximum flow rate of the hydraulic fluid providable by the displacement pump 125 using another predefined computational model. If the second input data 102 indicate the degree of utilization of the rotary drive 130 or the drive system 140 driving the rotary drive 130, the processing circuitry 110 may be configured to determine the maximum flow rate providable by the displacement pump 125 based on one or more characteristic curves indicating a relation between the maximum flow rate providable and the degree of utilization of the rotary drive 130 or the drive system 140 driving the rotary drive 130. The one or more characteristic curves are graphical representations or data sets that show the relationship between two variables - in this case, the maximum flow rate of hydraulic fluid that the displacement pump 125 can provide and the degree of utilization of the rotary drive 130 or the drive system 140 driving the rotary drive 130. As described above, various parameters may be used to indicate the degree of utilization of the rotary drive 130 or the drive system 140 driving the rotary drive 130. The one or more characteristic curves are predetermined (e.g., based on empirical or historic data or theoretical models). For example, the processing circuitry 110 may be configured to read data indicating the one or more characteristic curves from a memory (e.g., of the lifting equipment 150). The one or more characteristic curves define how much flow rate can be (safely) provided by the displacement pump 125 at different levels of utilization.

The processing circuitry 110 is configured to compare the determined maximum flow rate providable by the displacement pump 125 to the determined target flow rate of the hydraulic fluid to be provided by the displacement pump 125. For example, the processing circuitry 110 may be configured to continuously monitor both the determined maximum flow rate providable by the displacement pump 125 and the determined target flow rate of the hydraulic fluid to be provided by the displacement pump 125. Furthermore, the processing circuitry 110 may be configured to (continuously) compare the determined maximum flow rate providable by the displacement pump 125 and the determined target flow rate of the hydraulic fluid to be provided by the displacement pump 125 in real-time.

If the maximum flow rate providable by the displacement pump 125 is lower than the target flow rate to be provided by the displacement pump 125, the processing circuitry 110 is configured to control the valves 121 to reduce their opening degrees according to a predefined logic to reduce a torque or power to be delivered by the rotary drive 130 for driving the displacement pump 125. For reducing the torque or power to be delivered by the rotary drive 130 for driving the displacement pump 125, the processing circuitry 110 is configured to control the valves 121 to reduce their opening degrees according to the predefined logic to reduce the flow rate of the hydraulic fluid in the hydraulic system 120. The processing circuitry 120 may, e.g., be configured to dynamically control the valves 121 to reduce their opening degrees to achieve the reduced flow rate of the hydraulic fluid in the hydraulic system 120. For example, the processing circuitry 110 may generate control signals or control data for the valves 121 and supply it to the valves 121. Based on the control signals or control data, the valves 121 may adjust their respective opening degree.

The torque or power demand is directly related to the flow rate of the hydraulic fluid in the hydraulic system 120. Higher flow rates require more torque and power from the displacement pump 125 and rotary drive 130. When the processing circuitry 110 controls the valves 121 to reduce their opening degrees (i.e., to partially close), it decreases the flow rate of the hydraulic fluid through the hydraulic system 120. Lowering the flow rate means that the displacement pump 125 requires less force to move the hydraulic fluid, thereby reducing the torque or power required from the rotary drive 130. This prevents the rotary drive 130 or the drive system 140 driving the rotary drive 130 from being overloaded and allows it to operate within safe and efficient limits. For example, the opening degrees of the valves 121 may initially be determined or adjusted by the equipment control circuitry 160 based on the first input data 101 and the apparatus 100 may be used to adjust (correct) the opening degrees of the valves 121 based on the second input data 102, i.e., status of the rotary drive 130 or the drive system 140 driving the rotary drive 130.

The predefined logic may be embedded in the processing circuitry 110's firmware or in software executed by the processing circuitry 110. The predefined logic is a set of rules that determine how the opening degrees of the valves 121 are adjusted to manage the flow rate of the hydraulic fluid. In particular, the predefined logic defines how much to reduce the individual opening degrees of the valves 121. This reduction controls the amount of the hydraulic fluid flowing through the hydraulic system 120, thereby adjusting the torque or power demand on the rotary drive 130. According to examples, the processing circuitry 110 may be configured to receive third input data 103 indicating current opening degrees of the valves 121 and determine how much to reduce the individual opening degrees of the valves 121 further based on the third input data 103. The predefined logic may use various parameters and considerations to make these adjustments. For example, the predefined logic may use prioritization rules determining which hydraulic functions (e.g., lifting, rotating, extending) are most critical and should be maintained at higher performance levels, while others may be slowed down or reduced. In other words, the processing circuitry 110 may be configured to control the valves 121 to reduce their opening degrees according to the predefined logic to prioritize performance of one or more of the hydraulically driven functions over the performance of the other hydraulically driven functions. The predefined logic allows for different prioritization strategies, which may, e.g., be tailored to specific operational needs. In alternative examples, a uniform reduction may be applied across all hydraulically driven functions to distribute the available hydraulic power and fluid flow evenly, ensuring no single function is completely stopped. In other words, the processing circuitry 110 may be configured to control the valves 121 to reduce their opening degrees according to the predefined logic to reduce performance of the hydraulically driven functions uniformly.

The processing circuitry 110 may be configured to control the valves 121 to reduce their opening degrees according to the predefined logic to reduce the flow rate of the hydraulic fluid in the hydraulic system 120 below the maximum flow rate providable. The processing circuitry 110 may, e.g., determine how much to reduce the valve openings to ensure that the flow rate of the hydraulic fluid in the hydraulic system 120 is (e.g., safely) maintained below the maximum flow rate providable by the displacement pump 125, preventing overloading. In other words, by reducing the flow rate of the hydraulic fluid in the hydraulic system when the rotary drive 130 driving the displacement pump 125 (and analogously the driving system 140 driving the rotary drive 130) cannot meet the target flow rate, overload of the rotary drive 130 (and analogously the driving system 140) is prevented. This protects the rotary drive 130 (and analogously the driving system 140) and the hydraulic system 120 from damage and extends its lifespan.

Furthermore, reducing the flow rate of the hydraulic fluid in the hydraulic system 120 allows to avoid stopping of the hydraulically driven functions entirely. As the flow rate of the hydraulic fluid in the hydraulic system 120 is reduced, the demand for hydraulic power remains within the limits of what the displacement pump and rotary drive 130 can provide. The controlled reduction in flow rate balances the demands of all hydraulically driven functions with the limited fluid supply, ensuring that each function continues to receive at least some hydraulic fluid to operate, even if at a slower pace or reduced capacity. This ensures that the lifting equipment 150 operates smoothly even when under high demand, avoiding abrupt stops that could disrupt operations. In other words, if the maximum flow rate providable by the displacement pump 125 is lower than the target flow rate to be provided by the displacement pump 125, the processing circuitry 110 may be configured to control the valves 121 to reduce their opening degrees according to the predefined logic to reduce the flow rate of the hydraulic fluid in the hydraulic system 120 without one of the hydraulically driven functions having to stop due to the reduced flow rate. For example, the predefined logic may define minimum (acceptable) performance levels for one or more (e.g., all) of the hydraulically driven functions to ensure safe and continuous operation. By reducing the flow rate, the system can distribute the available hydraulic fluid more evenly or according to a specific priority across all the hydraulically driven functions of the lifting equipment 150. Instead of directing all the fluid to a single hydraulically driven function (which could result in other hydraulically driven functions stopping), the reduced flow of hydraulic fluid in the hydraulic system 120 is used to maintain a base level of operation for all hydraulically driven functions. The predefined logic determines how much to reduce the opening degrees of the valves 121 to balance the flow rate across all hydraulically driven functions, ensuring that the hydraulic system 120 stays within the limits of the maximum flow rate that can be provided by the displacement pump 125. The predefined logic may involve gradually reducing the opening degrees of the valves 121 in a uniform manner or based on specific prioritization rules to ensure that all hydraulically driven functions are maintained at a reduced, but operational, level.

According to examples, one or more (e.g., all) of the hydraulically driven functions may be slowed down, allowing for continued operation even under restricted conditions. In other words, if the maximum flow rate providable by the displacement pump 125 is lower than the target flow rate to be provided by the displacement pump 125, the processing circuitry 110 may be configured to control the valves 121 to reduce their opening degrees according to the predefined logic to slow down the hydraulically driven functions. By reducing the opening degrees of the valves 121, the processing circuitry 110 limits the amount of hydraulic fluid flowing to each hydraulically driven function. This decrease in fluid flow results in the hydraulically driven functions operating at a slower speed or reduced force. For example, the predefined logic may allow lowering the speed of a movement for a hydraulically driven function but not below a certain safety threshold to avoid stopping of the hydraulically driven function. Unlike stopping any hydraulically driven function entirely, it is ensured that all hydraulically driven functions continue to operate, albeit at a slower rate, thereby maintaining overall operational continuity. By slowing down rather than stopping hydraulically driven functions, a level of control is maintained that helps prevent sudden stops or abrupt movements, which could destabilize the lifting equipment 150 or a load, potentially leading to accidents.

For example, if the lifting equipment 150 is a crane lifting a heavy load while simultaneously rotating, and the maximum flow rate providable by the displacement pump 125 is insufficient to maintain both actions at full speed, the predefined logic may prioritize the lifting function to maintain safety and stability. The rotation speed might be reduced, while the lifting speed is kept closer to the desired level.

By dynamically adjusting the flow rate based on real-time conditions, use of an oversized hydraulic system may be avoided, leading to better energy efficiency and reduced energy emissions. In other words, the sustainability of the lifting equipment 150 may be improved compared to a conventional lifting equipment.

If the maximum flow rate providable by the displacement pump 125 (based on the status of the rotary drive 130 or the driving system 140) is equal to or greater than the target flow rate, the target movement may be performed at the required speed and force without adjustments of the opening degrees of the valves 121. Accordingly, the valves 121 are not controlled to reduce their opening degrees according to reduce the torque or power to be delivered by the rotary drive 1230 for driving the displacement pump 125. In other words, if the maximum flow rate providable is at least (i.e., equal to or greater than) the target flow rate, the processing circuitry 110 is configured to not control the valves 121 to reduce their opening degrees according to the predefined logic.

The first input data 101, second input data 102 as well as other input data to the processing circuitry 110 may be real-time data (i.e., data that is delivered/received immediately after collection/generation without significant delay). This may ensure dynamic control of the valves 121 and, hence, dynamic overload prevention for the rotary drive 130 (and analogously the driving system 140).

The first input data 101, second input data 102 as well as other input data to the processing circuitry 110 may be time series data. Time series data is a sequence of data points in chronological order for succeeding time instants. Accordingly, the first input data 101 may indicate a sequence of data points in chronological order for succeeding time instants that indicate one or more target movements to be performed by the lifting equipment over time. The second input data 102 may indicate a sequence of data points in chronological order for succeeding time instants for the status of the rotary drive 130 or the drive system 140 driving the rotary drive 130. In these examples, the processing circuitry 110 may be configured to continuously determine the target flow rate of the hydraulic fluid to be provided by the displacement pump 125 and the maximum flow rate of the hydraulic fluid providable by the displacement pump 125 and to continuously determine if the maximum flow rate providable is lower than the target flow rate. This may ensure that the valves 121 are controlled based on the current status of the rotary drive 130 or the drive system 140 driving the rotary drive 130 at all times. This may ensure accurate control of the valves 121 and, hence, continuous overload prevention for the rotary drive 130.

According to examples of the present disclosure, the lifting equipment 150 may comprise plural (multiple) hydraulic systems each comprising a displacement pump driven by a rotary drive, hydraulic actuators and valves. The displacement pumps of the different hydraulic systems may be driven by the same rotary drive(s) or by separate (different) rotary drives.

The plural hydraulic systems may be used for providing different hydraulically driven functions of the lifting equipment 150. Accordingly, the lifting equipment 150 may comprise the apparatus 100 multiple times such that the opening degrees of the valves may be controlled individually (and, e.g., independently) by the respective apparatus 100 in the plural hydraulic systems according to the proposed technique. Accordingly, overload of the rotary drive(s) driving the displacement pumps of the hydraulic systems may be avoided. Also the other beneficial effects described herein may be achieved for the respective hydraulic system.

The overall power or torque consumption by the plural hydraulic systems may be monitored and/or controlled by a central instance such as the apparatus 100 or another processing circuitry. To ensure proper functioning of the lifting equipment, the central instance may assign (allocated, designate, specify) maximum torques or powers to the individual hydraulic systems. For example, a first maximum torque or power may be assigned to a first hydraulic system for providing one or more first hydraulically driven functions, a second maximum torque or power may be assigned to a different second hydraulic system for providing one or more second hydraulically driven functions, and so on. The first, second, etc. maximum torques or powers may be determined by the central instance according to various criteria. For example, the same maximum torques or powers may be assigned to the plural hydraulic systems. In other examples, the performance of one or more hydraulically driven functions may be prioritized over the performance of one or more other hydraulically driven functions. In these examples, first, second, etc. maximum torques or powers may be determined by the central instance according to the priorities of the hydraulically driven functions (to be) provided by the respective hydraulic system.

Accordingly, the processing circuitry 110 may be further configured to receive fourth input data 104 indicating the maximum torque or power assigned to the hydraulic system. If the maximum flow rate providable is lower than the target flow rate, the processing circuitry 110 may accordingly be configured to control the valves 121 to reduce their opening degrees according to the predefined logic to reduce the torque or power to be delivered by the rotary drive 130 for driving the displacement pump 125 below the maximum torque or power assigned to the hydraulic system. This may ensure that the hydraulic system operated in accordance with the parameters set by the central instance. Hence, proper functioning of the lifting equipment may be ensured.

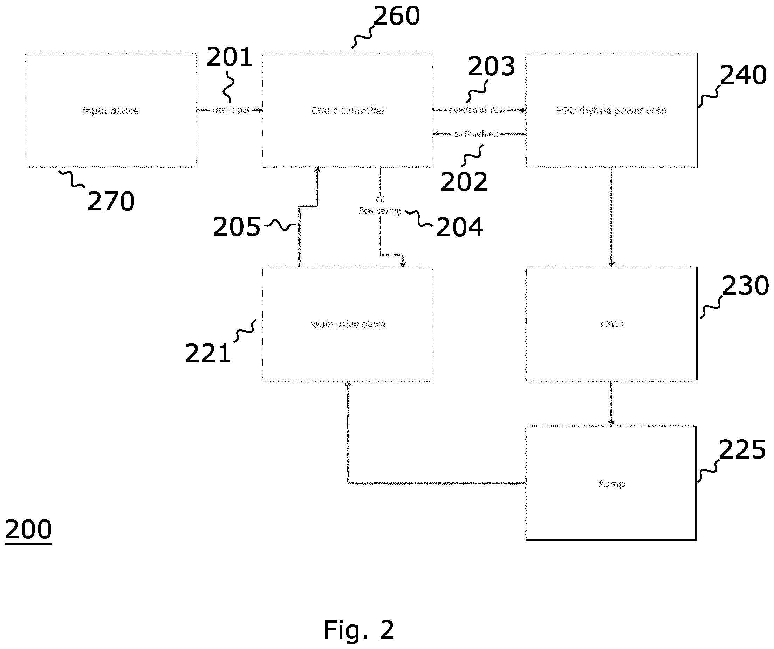

**Fig. 2** schematically illustrates an exemplary crane 200 using the dynamic torque or power reduction described above. Like the lifting equipment 100 described above, the crane 200 comprises a hydraulic system for providing hydraulically driven functions of the crane 200 such as lifting, lowering, extending, retracting, tilting, rotating and stabilizing. For reasons of simplicity only the displacement pump 225 and the valves 221 of the hydraulic system are illustrated in Fig. 2. In the example of Fig. 2, the displacement pump 225 is driven by an ePTO 230. The ePTO 230 is controlled by a Hybrid Power Unit (HPU) 240 that is mountable to the crane 200 or a vehicle having mounted thereon the crane 200 (e.g., a truck having mounted thereon the crane 200).

A user or operator makes a user input 201 at an input device 270 such as a remote control or a mobile device to indicate a target movement to be performed by the crane 200 (e.g., extracting an extractable crane section of the crane 200 or changing a position of a crane arm of the crane 200). The user input 201 is communicated to a crane controller 260 of the crane 200. The crane controller 260 determines a target flow rate 203 of hydraulic fluid to be provided by the displacement pump 225 of the crane 200's hydraulic system for performing the target movement. For example, the target flow rate 203 of hydraulic fluid may be a needed flow of hydraulic oil. The target flow rate 203 is communicated to the HPU 240 such that the HPU 240 can control the ePTO 230 to drive the displacement pump 225 at a corresponding rotational speed. For example, the HPU 240 may forward a corresponding volume flow request to the ePTO 230.

The HPU 240 further determines, based on a status of the ePTO 230, a maximum flow rate 202 of the hydraulic fluid providable by the displacement pump 225. For example, the maximum flow rate 202 of the hydraulic fluid providable may be a flow limit of hydraulic oil. The HPU 240 may, e.g., determine a deviation or difference of an actual rotational speed of the ePTO 230 from/to a target rotational speed for the ePTO 230 to determine whether the eP-TO 230 is 100 % and determine the maximum flow rate 202 of the hydraulic fluid providable based thereon. Alternatively or additionally, the HPU 240 may determine the maximum flow rate 202 of the hydraulic fluid providable based on a measured motor current of the ePTO 230 or a torque estimate of an inverter of the ePTO 230. Further alternatively or additionally, the HPU 240 may determine the maximum flow rate 202 of the hydraulic fluid providable based on a measured pressure of/at the displacement pump 225. Still further alternatively or additionally, the HPU 240 may determine the maximum flow rate 202 of the hydraulic fluid providable based on a measured torque at the ePTO 230 and a maximum torque providable by the ePTO 230. According to examples, the HPU 240 may determine the maximum flow rate 202 of the hydraulic fluid providable based on a utilization, a current and a voltage of a battery of the crane 200 or an external battery that supplies the ePTO 230 with electrical energy.

The determined maximum flow rate 202 of the hydraulic fluid providable by the displacement pump 225 is communicated to the crane controller 260. In other words, if a component of the ePTO 230 is unable to supply this volume flow requirement under the current pressure conditions, this is recognized by the HPU 240 and it reports a corresponding maximum flow rate 202 of the hydraulic fluid providable 202 (e.g., a flow limit of hydraulic oil) back to the crane controller 260.

Analogously to what is described above, the crane controller 260 compares the determined target flow rate 203 of hydraulic fluid to be provided by the displacement pump 225 to the determined maximum flow rate 202 of the hydraulic fluid providable by the displacement pump 225. If the maximum flow rate 202 providable is lower than the target flow rate 203, the crane controller 260 controls the valves 221 to reduce their valve deflections according to a predefined logic to reduce a torque or power to be delivered by the ePTO 230 for driving the displacement pump 225 by reducing the flow rate of the hydraulic fluid in the hydraulic system. Else, the valves 221 are not controlled to reduce their valve deflections according to reduce the torque or power to be delivered by the rotary drive for driving the displacement pump. In other words, the crane controller 260 recognizes as soon as the maximum flow rate 202 providable is smaller than the target flow rate 203 of hydraulic fluid and limits the volume flow with the prioritization logic by reducing the valve deflection of the valves 221. For example, corresponding settings 204 for the valve deflections of the valves 221 may be communicated by the crane controller 260 to the valves 221. The valves 221 may communicate their current valve deflections 205 to the crane controller 260.

By reducing the valve deflections, the required torque of the displacement pump 225 at the ePTO 230 decreases without one of the deflected hydraulically driven functions of the crane 200 stopping as the function slows down.

As is evident from the foregoing description, the functionality of the apparatus 100 described above is integrated into the crane controller 260 and the HPU 240 in the example of Fig. 2

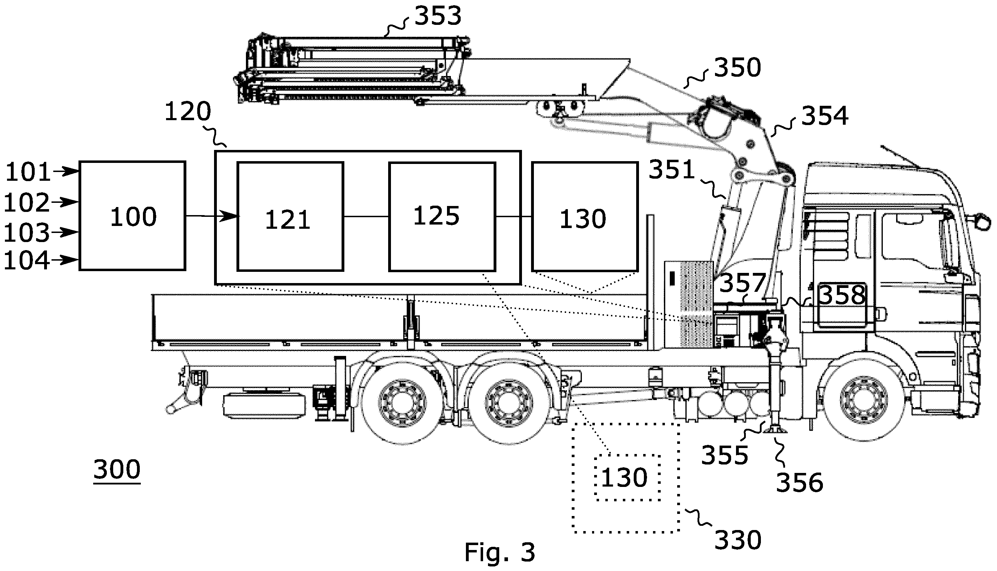

**Fig. 3** further illustrates a truck as an exemplary vehicle 300 having mounted thereon (holding) a loader crane (knuckle boom crane) 350 as an exemplary lifting equipment. In the example of Fig. 3, the loader crane 350 comprises hydraulic cylinders 351, 352 and 353 for driving (moving) the crane arm 354 of the loader crane 350. The crane arm 354 is an exemplary lifting device of a lifting equipment. Additionally, the loader crane 350 comprises hydraulic cylinders 355 for driving (moving) the outriggers 356. Further illustrated in Fig. 3 is the slewing drive 358 for rotating the crane arm 354 relative to the base 357 of the loader crane 350. The hydraulic cylinders and the slewing drive(s) are exemplary hydraulic actuators, hydraulically coupled to the displacement pump 125 of the loader crane 350 and form the hydraulic system 120 of the loader crane 350. The hydraulic cylinders and the slewing drive(s) provide hydraulically driven functions of the loader crane 350. The hydraulic cylinders and the slewing drive(s) are drivable (driven) by the displacement pump 125 of the loader crane 350. The displacement pump 125 of the loader crane 350 is driven by the rotary drive 130 on the vehicle 300. The flow of the hydraulic fluid in the hydraulic system 120 of the loader crane 350 is controlled by valves 121 to provide the hydraulically driven functions of the loader crane 350 according to user inputs of a user or operator of the loader crane 350.

The vehicle 300 further comprises the apparatus 100 according to the present disclosure for controlling the opening degrees of the valves regulating flow of the hydraulic fluid in the hydraulic system 120.

As described above, the rotary drive 130 may be mounted on (to) the vehicle 300. For example, the rotary drive may be a PTO of the vehicle 300. The PTO may, e.g., be driven by a combustion engine and optionally a gearbox of the vehicle 300. In alternative examples, the rotary drive 130 may be an ePTO on the vehicle 300. For reasons of simplicity, the rotary drive 130 is illustrated schematically in Fig. 3.

In alternative examples, the rotary drive 130 may be external to the vehicle 300. For example, the rotary drive 130 may be part of an external aggregate or power unit 330 to which the vehicle 300 is mechanically coupleable. Accordingly, the vehicle 300 or the loader crane 350 may be configured to mechanically couple the displacement pump 125 to the external rotary drive 130. For example, the vehicle 300 or the loader crane 350 may comprise one or more of a drive shaft, a hydraulic coupler or clutch, a belt or a chain drive for mechanically coupling the displacement pump 125 to the external rotary drive 130 of the external aggregate or power unit 330.

Compared to conventional vehicles, the vehicle 300 may prevent overload of the rotary drive 130 when the rotary drive 130 driving the displacement pump 125 cannot meet the target flow rate. Accordingly, stopping of the hydraulically driven functions entirely may be avoided. This may ensure that the loader crane 350 operates smoothly even when under high demand, avoiding abrupt stops that could disrupt operations. Furthermore, energy efficiency may be improved and energy emissions may be reduced, leading to an improved sustainability of the loader crane 350 and the vehicle 300.

Fig. 3 focused on the loader crane 350 as an exemplary lifting equipment. However, as indicated above, present disclosure is not limited to the lifting equipment being the loader crane 350 mounted to the vehicle 300. In general, the lifting equipment may be any type of crane using a displacement pump to provide hydraulic power. Apart from a knuckle boom or loader crane for loading and unloading goods (loads), the lifting equipment may, e.g., be the crane section of a mobile crane (with the vehicle being the mobile platform having mounted thereon the crane section) or the entire mobile crane. The lifting equipment may alternatively be a stationary (immobile, fixed) crane. It is to be noted further that the present disclosure is not limited to cranes. In other examples, the lifting equipment may, e.g., be a forklift using a displacement pump to provide hydraulic power for various applications such as raising and lowering its forks or tilting the mast of the forklift to which the forks are mounted. In still other examples, the lifting equipment may, e.g., be a lifting platform using a displacement pump to provide hydraulic power for various applications such as raising and lowering its platform.

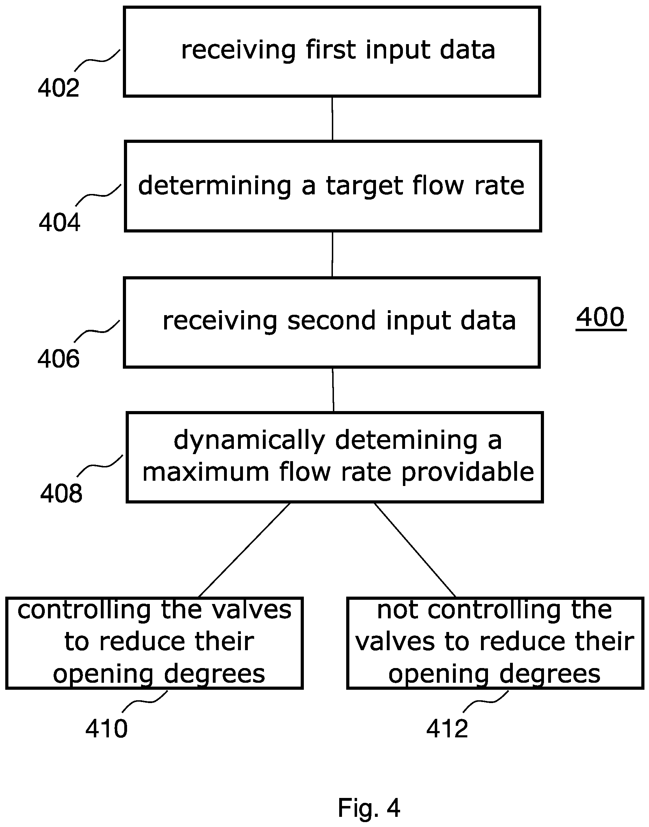

For further highlighting the dynamic torque or power reduction described above, **Fig. 4** illustrates a flowchart of a method 400 for controlling opening degrees of valves regulating flow of hydraulic fluid in a hydraulic system of a lifting equipment to provide hydraulically driven functions of the lifting equipment. The method 400 comprises receiving 402 first input data indicating a user input. The user input indicates a target movement to be performed by the lifting equipment. The method 400 comprises determining 404, based on the first input data, a target flow rate of the hydraulic fluid to be provided by a displacement pump of the hydraulic system. The displacement pump is driven by a rotary drive. In addition, the method 400 comprises receiving 406 second input data indicating a status of the rotary drive or a drive system driving the rotary drive and dynamically determining 408, based on the second input data, a maximum flow rate of the hydraulic fluid providable by the displacement pump. If the maximum flow rate providable is lower than the target flow rate, the method 400 comprises controlling 410 the valves to reduce their opening degrees according to a predefined logic to reduce a torque or power to be delivered by the rotary drive for driving the displacement pump by reducing the flow rate of the hydraulic fluid in the hydraulic system. Else, the valves are not controlled to reduce their opening degrees according to reduce the torque or power to be delivered by the rotary drive for driving the displacement pump. In other words, if the maximum flow rate providable is at least (i.e., equal to or greater than) the target flow rate, method 400 comprises not controlling 412 the valves to reduce their opening degrees according to the predefined logic.

Analogously to what is described above, the method 400 may allow to prevent overload of the rotary drive by reducing the flow rate of the hydraulic fluid in the hydraulic system when the rotary drive driving the displacement pump cannot meet the target flow rate. Accordingly, stopping of the hydraulically driven functions entirely may be avoided. Furthermore, energy efficiency may be improved and energy emissions may be reduced, leading to an improved sustainability.

More details and aspects of the method 400 are explained in connection with the proposed technique or one or more examples described above (e.g., Fig. 1 to Fig. 3). The method 400 may comprise one or more additional optional features corresponding to one or more aspects of the proposed technique or one or more examples described above.

The examples described herein may be summarized as follows:
In the following, some examples of the proposed concept are presented:

An example (e.g., example 1) relates to an apparatus for controlling opening degrees of valves regulating flow of hydraulic fluid in a hydraulic system of a lifting equipment to provide hydraulically driven functions of the lifting equipment. The apparatus comprises processing circuitry configured to receive first input data indicating a user input. The user input indicates a target movement to be performed by the lifting equipment. The processing circuitry is configured to determine, based on the first input data, a target flow rate of the hydraulic fluid to be provided by a displacement pump of the hydraulic system for performing the target movement. The displacement pump is driven by a rotary drive. Further, the processing circuitry is configured to receive second input data indicating a status of the rotary drive or a drive system driving the rotary drive and to dynamically determine, based on the second input data, a maximum flow rate of the hydraulic fluid providable by the displacement pump. If the maximum flow rate providable is lower than the target flow rate, the processing circuitry is configured to control the valves to reduce their opening degrees according to a predefined logic to reduce a torque or power to be delivered by the rotary drive for driving the displacement pump by reducing the flow rate of the hydraulic fluid in the hydraulic system.

Another example (e.g., example 2) relates to a previous example (e.g., example 1) or to any other example, wherein, if the maximum flow rate providable is lower than the target flow rate, the processing circuitry is configured to control the valves to reduce their opening degrees according to the predefined logic to reduce the flow rate of the hydraulic fluid in the hydraulic system below the maximum flow rate providable.

Another example (e.g., example 3) relates to a previous example (e.g., one of the examples 1 or 2) or to any other example, wherein, if the maximum flow rate providable is lower than the target flow rate, the processing circuitry is configured to control the valves to reduce their opening degrees according to the predefined logic to reduce the flow rate of the hydraulic fluid in the hydraulic system without one of the hydraulically driven functions having to stop due to the reduced flow rate.

Another example (e.g., example 4) relates to a previous example (e.g., one of the examples 1 to 3) or to any other example, wherein, if the maximum flow rate providable is lower than the target flow rate, the processing circuitry is configured to control the valves to reduce their opening degrees according to the predefined logic to slow down the hydraulically driven functions.

Another example (e.g., example 5) relates to a previous example (e.g., one of the examples 1 to 4) or to any other example, wherein the processing circuitry is configured to control the valves to reduce their opening degrees according to the predefined logic to reduce performance of the hydraulically driven functions uniformly.

Another example (e.g., example 6) relates to a previous example (e.g., one of the examples 1 to 4) or to any other example, wherein the processing circuitry is configured to control the valves to reduce their opening degrees according to the predefined logic to prioritize performance of one or more of the hydraulically driven functions over the performance of the other hydraulically driven functions.

Another example (e.g., example 7) relates to a previous example (e.g., one of the examples 1 to 6) or to any other example, wherein the user input is a measured position of at least one control lever for controlling movement of the lifting equipment, and wherein the processing circuitry is configured to determine the target flow rate based on the measured position of the at least one control lever.

Another example (e.g., example 8) relates to a previous example (e.g., one of the examples 1 to 7) or to any other example, wherein the status of the rotary drive or the drive system driving the rotary drive indicates a degree of utilization of the rotary drive or the drive system driving the rotary drive.

Another example (e.g., example 9) relates to a previous example (e.g., example 8) or to any other example, wherein the processing circuitry is configured to determine the maximum flow rate providable based on one or more characteristic curves indicating a relation between the maximum flow rate providable and the degree of utilization of the rotary drive or the drive system driving the rotary drive.

Another example (e.g., example 10) relates to a previous example (e.g., one of the examples 1 to 9) or to any other example, wherein the rotary drive is a power take-off of a vehicle, the vehicle having mounted thereon or being the lifting equipment.

Another example (e.g., example 11) relates to a previous example (e.g., one of the examples 1 to 9) or to any other example, wherein the rotary drive is an electric rotary drive.

Another example (e.g., example 12) relates to a previous example (e.g., one of the examples 1 to 11) or to any other example, wherein the processing circuitry is further configured to receive third input data indicating a maximum torque or power assigned to the hydraulic system, and wherein, if the maximum flow rate providable is lower than the target flow rate, the processing circuitry is configured to control the valves to reduce their opening degrees according to the predefined logic to reduce the torque or power to be delivered by the rotary drive for driving the displacement pump below the maximum torque or power assigned to the hydraulic system.

An example (e.g., example 13) relates to a lifting equipment comprising a hydraulic system. The hydraulic system comprises a displacement pump configured to be driven by a rotary drive for generating a flow of hydraulic fluid in the hydraulic system. Furthermore, the hydraulic system comprises valves configured to regulate the flow of the hydraulic fluid in the hydraulic system to provide hydraulically driven functions of the lifting equipment. The lifting equipment further comprises the apparatus according to a previous example (e.g., one of the examples 1 to 12) or to any other example for controlling the opening degrees of the valves.

Another example (e.g., example 14) relates to a previous example (e.g., example 13) or to any other example, further comprising that the lifting equipment is a loader crane.

An example (e.g., example 15) relates to a vehicle having mounted thereon or being the lifting equipment according to a previous example (e.g., example 13 or example 14) or to any other example.

An example (e.g., example 16) relates to a method for controlling opening degrees of valves regulating flow of hydraulic fluid in a hydraulic system of a lifting equipment to provide hydraulically driven functions of the lifting equipment. The method comprises receiving first input data indicating a user input. The user input indicates a target movement to be performed by the lifting equipment. The method comprises determining, based on the first input data, a target flow rate of the hydraulic fluid to be provided by a displacement pump of the hydraulic system. The displacement pump is driven by a rotary drive. In addition, the method comprises receiving second input data indicating a status of the rotary drive or a drive system driving the rotary drive and dynamically determining, based on the second input data, a maximum flow rate of the hydraulic fluid providable by the displacement pump. If the maximum flow rate providable is lower than the target flow rate, the method comprises controlling the valves to reduce their opening degrees according to a predefined logic to reduce a torque or power to be delivered by the rotary drive for driving the displacement pump by reducing the flow rate of the hydraulic fluid in the hydraulic system.

Another example (e.g., example 17) relates to a non-transitory machine-readable medium having stored thereon a program having a program code for performing the method according to a previous example (e.g., example 16) or to any other example, when the program is executed on a processor or a programmable hardware.

Another example (e.g., example 18) relates to a program having a program code for performing the method according to a previous example (e.g., example 16) or to any other example, when the program is executed on a processor or a programmable hardware.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), ASICs, integrated circuits (ICs) or SoCs programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. An apparatus (100) for controlling opening degrees of valves regulating flow of hydraulic fluid in a hydraulic system (120) of a lifting equipment (150) to provide hydraulically driven functions of the lifting equipment (150), the apparatus (100) comprising processing circuitry (110) configured to:
receive first input data (101) indicating a user input, wherein the user input indicates a target movement to be performed by the lifting equipment (150);
determine, based on the first input data (101), a target flow rate of the hydraulic fluid to be provided by a displacement pump (125) of the hydraulic system (120) for performing the target movement, wherein the displacement pump (125) is driven by a rotary drive (130);
receive second input data (102) indicating a status of the rotary drive (130) or a drive system (140) driving the rotary drive (130);
dynamically determine, based on the second input data (102), a maximum flow rate of the hydraulic fluid providable by the displacement pump (125); and
if the maximum flow rate providable is lower than the target flow rate, control the valves to reduce their opening degrees according to a predefined logic to reduce a torque or power to be delivered by the rotary drive (130) for driving the displacement pump (125) by reducing the flow rate of the hydraulic fluid in the hydraulic system (120).

2. The apparatus (100) of claim 1, wherein, if the maximum flow rate providable is lower than the target flow rate, the processing circuitry (110) is configured to control the valves to reduce their opening degrees according to the predefined logic to reduce the flow rate of the hydraulic fluid in the hydraulic system (120) below the maximum flow rate providable.

3. The apparatus (100) of claim 1 or claim 2, wherein, if the maximum flow rate providable is lower than the target flow rate, the processing circuitry (110) is configured to control the valves to reduce their opening degrees according to the predefined logic to reduce the flow rate of the hydraulic fluid in the hydraulic system (120) without one of the hydraulically driven functions having to stop due to the reduced flow rate.

4. The apparatus (100) of any one of claims 1 to 3, wherein, if the maximum flow rate providable is lower than the target flow rate, the processing circuitry (110) is configured to control the valves to reduce their opening degrees according to the predefined logic to slow down the hydraulically driven functions.

5. The apparatus (100) of any one of claims 1 to 4, wherein the processing circuitry (110) is configured to control the valves to reduce their opening degrees according to the predefined logic to reduce performance of the hydraulically driven functions uniformly.

6. The apparatus (100) of any one of claims 1 to 4, wherein the processing circuitry (110) is configured to control the valves to reduce their opening degrees according to the predefined logic to prioritize performance of one or more of the hydraulically driven functions over the performance of the other hydraulically driven functions.

7. The apparatus (100) of any one of claims 1 to 6, wherein the user input is a measured position of at least one control lever for controlling movement of the lifting equipment (150), and wherein the processing circuitry (110) is configured to determine the target flow rate based on the measured position of the at least one control lever.

8. The apparatus (100) of any one of claims 1 to 7, wherein the status of the rotary drive (130) or the drive system (140) driving the rotary drive (130) indicates a degree of utilization of the rotary drive (130) or the drive system (140) driving the rotary drive (130).

9. The apparatus (100) of claim 8, wherein the processing circuitry (110) is configured to determine the maximum flow rate providable based on one or more characteristic curves indicating a relation between the maximum flow rate providable and the degree of utilization of the rotary drive (130) or the drive system (140) driving the rotary drive (130).

10. The apparatus (100) of any one of claims 1 to 9, wherein the rotary drive (130) is a power take-off of a vehicle, the vehicle having mounted thereon or being the lifting equipment (150).

11. The apparatus (100) of any one of claims 1 to 9, wherein the rotary drive (130) is an electric rotary drive.

12. The apparatus (100) of any one of claims 1 to 11, wherein the processing circuitry is further configured to receive third input data (104) indicating a maximum torque or power assigned to the hydraulic system (120), and wherein, if the maximum flow rate providable is lower than the target flow rate, the processing circuitry is configured to control the valves to reduce their opening degrees according to the predefined logic to reduce the torque or power to be delivered by the rotary drive (130) for driving the displacement pump (125) below the maximum torque or power assigned to the hydraulic system (120).

13. A lifting equipment (150) comprising:
a hydraulic system (120) comprising:
a displacement pump (125) configured to be driven by a rotary drive (130) for generating a flow of hydraulic fluid in the hydraulic system (120); and
valves (121) configured to regulate the flow of the hydraulic fluid in the hydraulic system to provide hydraulically driven functions of the lifting equipment (300); and
the apparatus (100) according to one of claims 1 to 12 for controlling the opening degrees of the valves (121).

14. The lifting equipment (150) of claim 13, wherein the lifting equipment (150) is a loader crane.

15. A vehicle (300) having mounted thereon or being the lifting equipment (350) of claim 13 or claim 14.

## Amended claims

### Amended claims in accordance with Rule 137(2) EPC.

1. An apparatus (100) for controlling opening degrees of valves regulating flow of hydraulic fluid in a hydraulic system (120) of a lifting equipment (150) to provide hydraulically driven functions of the lifting equipment (150), the apparatus (100) comprising processing circuitry (110) configured to:
receive first input data (101) indicating a user input, wherein the user input indicates a target movement to be performed by the lifting equipment (150);
determine, based on the first input data (101), a target flow rate of the hydraulic fluid to be provided by a displacement pump (125) of the hydraulic system (120) for performing the target movement, wherein the displacement pump (125) is driven by a rotary drive (130);
receive second input data (102) indicating a status of the rotary drive (130) or a drive system (140) driving the rotary drive (130);
dynamically determine, based on the second input data (102), a maximum flow rate of the hydraulic fluid providable by the displacement pump (125); and
if the maximum flow rate providable is lower than the target flow rate, control the valves to reduce their opening degrees according to a predefined logic to reduce a torque or power to be delivered by the rotary drive (130) for driving the displacement pump (125) by reducing the flow rate of the hydraulic fluid in the hydraulic system (120) below the maximum flow rate providable.

2. The apparatus (100) of claim 1, wherein, if the maximum flow rate providable is lower than the target flow rate, the processing circuitry (110) is configured to control the valves to reduce their opening degrees according to the predefined logic to reduce the flow rate of the hydraulic fluid in the hydraulic system (120) without one of the hydraulically driven functions having to stop due to the reduced flow rate.

3. The apparatus (100) of claim 1 or claim 2, wherein, if the maximum flow rate providable is lower than the target flow rate, the processing circuitry (110) is configured to control the valves to reduce their opening degrees according to the predefined logic to slow down the hydraulically driven functions.

4. The apparatus (100) of any one of claims 1 to 3, wherein the processing circuitry (110) is configured to control the valves to reduce their opening degrees according to the predefined logic to reduce performance of the hydraulically driven functions uniformly.

5. The apparatus (100) of any one of claims 1 to 3, wherein the processing circuitry (110) is configured to control the valves to reduce their opening degrees according to the predefined logic to prioritize performance of one or more of the hydraulically driven functions over the performance of the other hydraulically driven functions.

6. The apparatus (100) of any one of claims 1 to 5, wherein the user input is a measured position of at least one control lever for controlling movement of the lifting equipment (150), and wherein the processing circuitry (110) is configured to determine the target flow rate based on the measured position of the at least one control lever.

7. The apparatus (100) of any one of claims 1 to 6, wherein the status of the rotary drive (130) or the drive system (140) driving the rotary drive (130) indicates a degree of utilization of the rotary drive (130) or the drive system (140) driving the rotary drive (130).

8. The apparatus (100) of claim 7, wherein the processing circuitry (110) is configured to determine the maximum flow rate providable based on one or more characteristic curves indicating a relation between the maximum flow rate providable and the degree of utilization of the rotary drive (130) or the drive system (140) driving the rotary drive (130).

9. The apparatus (100) of any one of claims 1 to 8, wherein the processing circuitry is further configured to receive third input data (104) indicating a maximum torque or power assigned to the hydraulic system (120), and wherein, if the maximum flow rate providable is lower than the target flow rate, the processing circuitry is configured to control the valves to reduce their opening degrees according to the predefined logic to reduce the torque or power to be delivered by the rotary drive (130) for driving the displacement pump (125) below the maximum torque or power assigned to the hydraulic system (120).

10. A lifting equipment (150) comprising:
a hydraulic system (120) comprising:
a displacement pump (125) configured to be driven by a rotary drive (130) for generating a flow of hydraulic fluid in the hydraulic system (120); and
valves (121) configured to regulate the flow of the hydraulic fluid in the hydraulic system to provide hydraulically driven functions of the lifting equipment (300); and
the apparatus (100) according to one of claims 1 to 9 for controlling the opening degrees of the valves (121).

11. The lifting equipment (150) of claim 10, wherein the lifting equipment (150) is a loader crane.

12. A vehicle (300) having mounted thereon or being the lifting equipment (350) of claim 10 or claim 11.

13. A method (400) for controlling opening degrees of valves regulating flow of hydraulic fluid in a hydraulic system of a lifting equipment to provide hydraulically driven functions of the lifting equipment, the method (400) comprising:
receiving (402) first input data indicating a user input, wherein the user input indicates a target movement to be performed by the lifting equipment;
determining (404), based on the first input data, a target flow rate of the hydraulic fluid to be provided by a displacement pump of the hydraulic system, wherein the displacement pump is driven by a rotary drive;
receiving (406) second input data indicating a status of the rotary drive or a drive system driving the rotary drive;
dynamically determining (408), based on the second input data, a maximum flow rate of the hydraulic fluid providable by the displacement pump; and
if the maximum flow rate providable is lower than the target flow rate, controlling (410) the valves to reduce their opening degrees according to a predefined logic to reduce a torque or power to be delivered by the rotary drive for driving the displacement pump by reducing the flow rate of the hydraulic fluid in the hydraulic system below the maximum flow rate providable.

14. A non-transitory machine-readable medium having stored thereon a program having a program code for performing the method according to claim 13, when the program is executed on a processor or a programmable hardware.

15. A program having a program code for performing the method according to claim 13, when the program is executed on a processor or a programmable hardware.
